(19) Europäisches Patentamt
European Patent Office
Office européen des brevets

(11) EP 3 636 418 B1

(12) EUROPEAN PATENT SPECIFICATION

(45) Date of publication and mention
of the grant of the patent:
**16.03.2022 Bulletin 2022/11**

(21) Application number: **18798301.0**

(22) Date of filing: **04.05.2018**

(51) International Patent Classification (IPC):
**B29C 70/02** (2006.01)     **B29C 70/16** (2006.01)
**B29C 70/30** (2006.01)     **B32B 37/10** (2006.01)
**B32B 37/24** (2006.01)     **B29L 7/00** (2006.01)
**B29C 70/12** (2006.01)     **B29C 70/66** (2006.01)

(52) Cooperative Patent Classification (CPC):
**B29C 70/66; B29C 70/02; B29C 70/12;
B32B 37/10; B32B 37/24**

(86) International application number:
**PCT/KR2018/005232**

(87) International publication number:
**WO 2018/208051 (15.11.2018 Gazette 2018/46)**

(54) **COMPOSITE MATERIAL PREFORMING BOARD AND MANUFACTURING METHOD THEREFOR**

VORFORMUNGSPLATTE AUS VERBUNDSTOFF UND HERSTELLUNGSVERFAHREN DAFÜR

PLAQUE DE PRÉFORMAGE EN MATÉRIAU COMPOSITE ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.05.2017 KR 20170057546**

(43) Date of publication of application:
**15.04.2020 Bulletin 2020/16**

(73) Proprietors:
• **LG Hausys, Ltd.**
  **Seoul 07326 (KR)**
• **ENVIONEER Co., Ltd.**
  **Bundang-gu, Seongnam-Si
  Gyeonggi-do (KR)**

(72) Inventors:
• **AHN, Seung-Hyun**
  **Seoul 07796 (KR)**

• **HAN, Kyung-Seok**
  **Seoul 07796 (KR)**
• **KIM, Hee-June**
  **Seoul 07796 (KR)**

(74) Representative: **Zacco Sweden AB**
  **P.O. Box 5581**
  **114 85 Stockholm (SE)**

(56) References cited:
**WO-A1-96/30088**          **WO-A1-2017/003146**
**JP-A- 2000 328 494**      **JP-A- 2000 328 494**
**JP-Y- 7 040 503**         **KR-A- 20120 000 714**
**KR-A- 20160 128 499**     **KR-A- 20170 002 725**
**KR-B1- 101 714 910**      **SE-B- 468 546**

EP 3 636 418 B1

## Description

**Field**

The present disclosure relates to a composite-based preformed board and a method of preparing the same.

**Description of Related Art**

Conventional thermoplastic composite material is composed of a thermoplastic resin constituting a matrix, and reinforced fibers such as glass fibers or carbon fibers having a high rigidity. Because the thermoplastic composite material exhibits higher mechanical properties than general thermoplastic resin materials, the thermoplastic composite material is widely used for automobiles and construction materials. A preparation method of the conventional thermoplastic composite mainly includes mixing reinforced fibers with a thermoplastic resin and then extruding the mixture and performing a mold press process thereto, thereby prepare a final product. However, when preparing the product using the extrusion, it is difficult to expect uniform dispersion of the reinforced fibers, and it is difficult to use the product to prepare a preform board with a pore structure unless a foaming agent is used separately.

Alternatively, the composite material is produced by first preparing a reinforced fiber sheet using a dry process such as air-laid, dry-laid, needle punching process, etc. and by impregnating the reinforced fiber sheet with a resin. However, when preparing the composite material using the dry process, it is difficult to achieve specific properties by applying various additives and fiber dispersibility is lowered such that a mechanical strength is lowered. In particular, during the needle punching process, agglomeration phenomenon of the reinforced fibers occurs, so that the resulting composite material may not have uniform mechanical properties. When performing a foaming process for preparation of a preform board, a porosity becomes low because the reinforced fibers are fixed due to the needle punching.

Document WO 2017/003146 A1, corresponding to the preamble of claim 1, discloses a vehicle underbody cover comprising: a central layer; and coating layers arranged on both surfaces of the central layer. The central layer comprises: first fibrous particles; second fibrous particles; and a binding material for binding the first fibrous particles and the second fibrous particles. The first fibrous particles and the second fibrous particles are bound by the binding material so as to form an irregular network structure including pores. The first fibrous particles are inorganic fiber or organic fiber. The second fibrous particles include a first thermoplastic resin. The binding material includes a second thermoplastic resin, and a melting point of the first thermoplastic resin is higher than a melting point of the second thermoplastic resin.

## DISCLOSURE

### TECHNICAL PURPOSES

One implementation of the present disclosure is to provide a composite-based preformed board easy to recycle, having a low production cost, and with excellent light weight. Further, the composite-based preformed board may provide improved mechanical strength because compatibility between the fiber and resin thereof is high. Further, when forming a part using the composite-based preformed board, the part may have a variety of thicknesses. The part may have excellent thermal insulation and sound absorbing and insulating performance.

Another implementation of the present disclosure is to provide a preparation method of a composite-based preformed board using a wet process, thereby to realize uniform properties throughout an entire board, improved fiber dispersibility, compared to a composite-based preformed board prepared using the dry process. In the method, a component other than the fiber and resin may be easily employed. Thus, this method may realize the composite-based preformed board having the various advantages as described above.

### TECHNICAL SOLUTIONS

In one implementation of the present disclosure, there is provided a composite-based preformed board according to independent claim 1.

In another implementation of the present disclosure, there is provided a method for preparing a composite-based preformed board according to independent claim 9.

### TECHNICAL EFFECTS

The composite-based preformed board easy to recycle, having a low production cost, and with excellent light weight may be realized. Further, the composite-based preformed board may provide improved mechanical strength

2

because compatibility between the fiber and resin thereof is high. Further, when forming a part using the composite-based preformed board, the part may have a variety of thicknesses. The part may have excellent thermal insulation and sound absorbing and insulating performance.

The preparation method of the composite-based preformed board using the wet process may realize uniform properties throughout an entire board, improved fiber dispersibility, compared to a composite-based preformed board prepared using the dry process. In the method, a component other than the fiber and resin may be easily employed. Thus, this method may realize the composite-based preformed board having the various advantages as described above.

## BRIEF DESCRIPTION OF DRAWINGS

FIG. 1 is a schematic diagram of a composite-based preformed board according to one implementation of the present disclosure.

FIG. 2 schematically illustrates a thermally expandable fine particle 14 and an expansion mechanism thereof according to one implementation of the present disclosure.

FIG. 3 schematically shows a portion of a preparation process of the composite-based preformed board.

## DETAILED DESCRIPTIONS

Advantages and features of the present disclosure, and a methods of achieving the same will be apparent with reference to the following description. However, the following description ensures that the present disclosure is complete and informs the skilled person to the art of a category of the present disclosure and is not intended to limit the present disclosure thereto. The present disclosure is only defined by a scope of the claims which follow.

In the drawings, a thickness or size of a layer or region is enlarged in order to clearly represent the layer or region. Further, in the drawings, some layers or regions are exaggerated for convenience of illustration. Like reference numerals refer to like components throughout the specification.

In one implementation of the present disclosure, there is provided a composite-based preformed board according to independent claim 1.

According to the present disclosure, the first fiber and the second fiber are only distinguished from each other for convenience in order to indicate that they are separate components based on raw material components. The first fiber and the second fiber may not essentially be made of different materials.

Further, similarly, according to the present disclosure, the first thermoplastic resin, the second thermoplastic resin, and the third thermoplastic resin are distinguished from each other for convenience in order to indicate that they are separate components. The first thermoplastic resin, the second thermoplastic resin, and the third thermoplastic resin may not essentially be made of different materials.

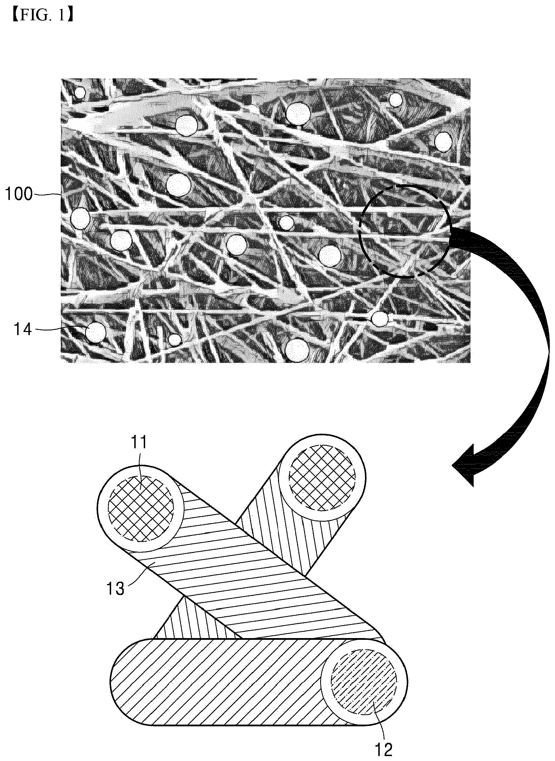

FIG. 1 is a schematic diagram of a composite-based preformed board 100 according to one implementation of the present disclosure. Referring to FIG. 1, the composite-based preformed board 100 includes a first fiber 11 and a second fiber 12, a binder 13 which binds the first fiber 11 and the second fiber 12 with each other.

In this connection, the first fiber 11 includes a first thermoplastic resin, the second fiber 12 includes a second thermoplastic resin, and the binder 13 includes a third thermoplastic resin. Further, each of a melting point of the first thermoplastic resin and a melting point of the second thermoplastic resin is higher than a melting point of the third thermoplastic resin.

The binder 13 remains in a coated state on at least a portion of a surface of each of the first fiber 11 and the second fiber 12. FIG. 1 shows that, in an example, the binder 13 is coated on the entire surface of each of the first fiber 11 and the second fiber 12. As such, coatings formed on the surfaces of the first fiber 11 and the second fiber 12 and made of the binder 13 are fused with each other such that the first fiber 11 and the second fiber 12 may be irregularly bound to each other; a plurality of the first fibers 11 may be irregularly bound to each other; alternatively, a plurality of the second fibers 12 may be irregularly bound to each other. As a result, the composite-based preformed board 100 has a 3-dimensional irregularly networked structure containing pores. Thus, the board 100 has a porous structure with a predefined porosity.

Further, referring to FIG. 1, the composite-based preformed board 100 includes thermally expandable fine particles 14. The thermally expandable fine particle 14 is positioned in the pore of the networked structure including the first fiber 11, the second fiber 12 and the binder 13.

The composite-based preformed board 100 may have a porosity of about 5% to about 80% by volume. For example, the board 100 may have a porosity of about 20% to about 60% by volume. The composite-based preformed board 100 may satisfy the porosity in the above range by comprehensively adjusting process conditions during preparation, and specific components and contents of the first fiber 11, the second fiber 12, and the binder 13. When the porosity of the composite-based preformed board 100 satisfies the above range, the board 100 may contain uniformly dispersed thermally expandable fine particles 14 therein, such that excellent light weight, heat insulation and sound absorption and insulating performance may be ensured.

In the composite-based preformed board 100, the first fiber 11 and the second fiber 12 differ in terms of elongation. Specifically, the elongation of the first fiber 11 is higher than the elongation of the second fiber 12.

Specifically, the first fiber 11 is a drawn fiber with elongation of about 300% to about 600%, while the first fiber 12 is a drawn fiber of elongation lower than 300% or a non-drawn fiber of 0% elongation.

The elongation of each of the first fiber 11 and the second fiber 12 refers to a percentage corresponding to a ratio of a maximal length to which a fiber stretches without a cut off relative to an original length of the fiber. As each of the elongations of the first and second fibers 11 and 12 satisfies the above range, the composite-based preformed board 100 exhibits excellent mechanical strength and rigidity, and shrinkage of the board 100 may be minimized in a thermoforming process. Furthermore, because the first fiber 11 and the second fiber 12 have different elongations, excellent impact resistance to external shock may be obtained via elastic complementary action. In accordance with the present disclosure, the elongation may be measured under ASTM D638-03.

The composite-based preformed board 100 may increase in thickness by about 3 to about 7 times by an additional forming process in which heat is applied to the board 100. This increase in thickness may be achieved due to expansion of the thermally-expandable fine particles 14 and interaction of the irregularly networked structure. The increase in thickness may be controlled by varying a temperature condition of the additional forming process depending on a final target thickness. When the composite-based preformed board 100 is heated in the additional forming process, the binder 13 softens or melts, such that the binding forces between the fibers are relaxed and thus the expansion of the irregularly networked structure occurs. At the same time, the thermally expandable fine particle 14 expands, thereby increasing an overall thickness of the composite-based preformed board 100.

In the composite-based preformed board 100 according to one implementation of the present disclosure, the first fiber 11 and the first fiber 12 include the thermoplastic resins as described above. That is, the first fiber 11 and the first fiber 12 are not inorganic fibers such as a glass fiber or carbon fiber.

When the inorganic fibers such as glass fibers are used as reinforced fibers, the thickness may increase due to elasticity of the fiber itself under the heating condition. However, there is a limit to the increase. Further, When the inorganic fibers such as carbon fibers are used as reinforced fibers, the fibers are not suitable for a material for a consumable part because of high preparation cost thereof. When the inorganic fibers such as glass fibers are used as reinforced fibers, the fibers has a low cost, but the glass fiber is exposed to the outside or scattered from an assembly to adversely affect a human body. For this reason, when applying the glass fiber as a reinforced fiber, a separate finishing material such as nonwoven fabric or film is used. This may lead to cost increase. Further, recyclability thereof as an environmental factor may be poor.

Therefore, in the composite-based preformed board 100 according to the implementation of the present disclosure, the first fiber 11 and the second fiber 12 are based on thermoplastic resin material. In addition, the thermally expandable fine particle 14 is based on the resin material. Thus, recycling ability of the board 100 may be excellent. A production cost thereof may be reduced. A wide ranged adjustable thicknesses may be achieved.

The composite-based preformed board 100 2. has a total content of about 30 parts by weight to about 50 parts by weight of the second fiber 12 and the binder 13, based on 100 parts by weight of the first fiber 11. As a result, this may advantageously simultaneously obtain excellent strength due to the first fiber 11 and impact resistance due to the second fiber 12. Further, the first fiber 11 and the second fiber 12 are bound to each other via the binder 13 to easily form a porous structure having an appropriate porosity.

Further, a content of the binder may be in a range of about 40 parts by weight to about 250 parts by weight, for example, of about 40 parts by weight to about 150 parts by weight, for example, of about 80 parts by weight to about 120 parts by weight, based on 100 parts by weight of the second fiber 12.

In a preparation method of the composite-based preformed board as described below, the second fiber 12 and the binder 13 is derived from a bicomponent polymer fiber, while the first fiber 11 is derived from a reinforced fiber. Therefore, in the preparation method as described later, controlling a content of each of components constituting the bicomponent polymer fiber, and a ratio between contents of the reinforced fiber and bicomponent polymer fiber may allow the composite-based preformed board 100 satisfying the above condition to be obtained.

A specific gravity of each of the first thermoplastic resin and the second thermoplastic resin may be greater than about 1, for example, may be in a range of about 1 to about 1.5. In the preparation method of the composite-based preformed board to be described later, the first fiber 11 corresponds to the reinforced fiber, while the second fiber 12 corresponds to a core of the bicomponent polymer fiber. The reinforced fiber and the bicomponent polymer fiber are dispersed in an aqueous solution in the preparation process of the composite-based preformed board 100. While considering that a specific gravity of water is about 1, each of the first thermoplastic resin included in the first fiber 11 and the second thermoplastic resin included in the second fiber 12 has a specific gravity greater than about 1 so that the first and second fibers do not float on a surface of the aqueous solution but may sink well therein. Thus, excellent dispersibility may be ensured. As a result, the mechanical strength of the composite-based preformed board 100 may be improved.

A fiber may have a diameter of a cross section perpendicular to a length direction of the fiber. The dimeter of the first fiber 11 may be in a range of from about 5 μm to about 40 μm, and a length thereof may be in a range of about 1 mm to about 50 mm. Further, a diameter of the second fiber 12 may be in a range of about 5 μm to about 30 μm, and a length thereof may be in a range of about 1 mm to about 50 mm. When the diameter and length of each of the first fiber 11 and the second fiber 12 satisfy each above range, a porous structure with a porosity suitable for use together with the thermally-expandable fine particles 14 may be obtained based on proper physical entanglement properties thereof.

Referring to the preparation method of the composite-based preformed board to be described later, the binder 13 is derived from a sheath of the bicomponent fiber while the second fiber 12 is derived from a core of the bicomponent fiber. That is, the sheath of the bicomponent fiber melts under a predefined temperature condition and then a portion of the melt is transferred to a surface of the first fiber 11, and thus acts as the binder 13 to bind the first fiber 11 and the second fiber 12 with each other. Therefore, the third thermoplastic resin constituting the binder 13 has a lower melting point than that of each of the first thermoplastic resin and the second thermoplastic resin constituting the first fiber 11 and the second fiber 12 respectively.

In one implementation, each of the first thermoplastic resin and the second thermoplastic resin may have a melting point of about 200 ° C to about 270 ° C. Further, the melting point of the third thermoplastic resin may be lower than about 200 °C, for example, about 100 degrees C or higher and be lower than about 200 degrees C. The melting point of each of the thermoplastic resins may be measured using a thermogravimetric analysis (TGA) instrument.

The melting point of each of the first, second and third thermoplastic resins may be controlled based on components constituting the resins, and chemical structures of the components, and the like.

Specifically, each of the first thermoplastic resin and the second thermoplastic resin may include at least one selected from a group consisting of polyester, polypropylene, polyethylene, acrylo-butadiene-styrene, polycarbonate, nylon, polyvinyl chloride, polystyrene, polyurethane, polymethylmethacrylate, polylactic acid, Teflon, and derivatives thereof.

In one implementation, each of the first thermoplastic resin and the second thermoplastic resin may include polyester having a melting point of 200 ° C to 270 ° C.

The third thermoplastic resin constituting the binder 13 may include at least one selected from a group consisting of polyester, polyethylene, polypropylene, polyethylene, acrylo-butadiene-styrene, polycarbonate, nylon, polyvinyl chloride, polystyrene, polyurethane, polymethylmethacrylate, polylactic acid, Teflon, and derivatives thereof.

In one implementation, the third thermoplastic resin may include polyester having a melting point of lower than 200 ° C, for example, greater than or equal to 100 ° C and lower than 200 ° C.

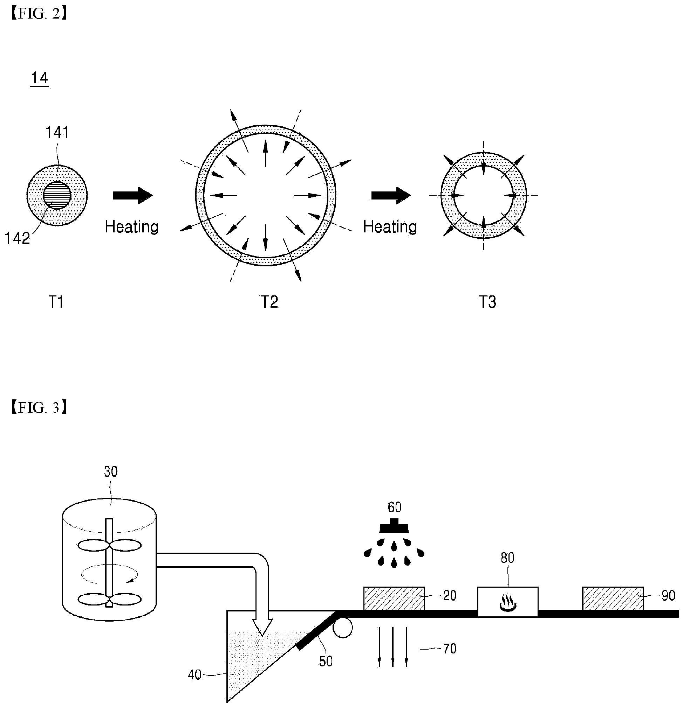

FIG. 2 schematically illustrates a thermally expandable fine particle 14 and an expansion mechanism thereof according to one implementation of the present disclosure.

Referring to FIG. 2, the thermally expandable fine particle 14 has a core-shell structure having a shell 141 made of a fourth thermoplastic resin and a core 142 sealed by the shell 141 and containing hydrocarbon gas.

The fourth thermoplastic resin constituting the shell 141 has a higher melting point than that of the third thermoplastic resin. Thus, in the preparation process of the composite-based preformed board to be described later, when the sheath including the third thermoplastic resin, of the bicomponent fiber is melted and is changed to the binder 13, the thermally expandable fine particle 14 may maintain a spherical shape.

For example, the fourth thermoplastic resin constituting the shell 141 may include one selected from a group consisting of acrylonitrile resin, vinyl chloride resin, and a combination thereof.

Referring to FIG. 2, the thermally expandable fine particle 14 begins to expand at an expansion initiation temperature T1, and expands to the largest size at a maximum expansion temperature T2. When a breakdown temperature T3 is reached, the shell 141 breaks and the particle contracts.

The expansion initiation temperature T1 of the thermally expandable fine particle 14 may be higher than the melting point of the third thermoplastic resin. For example, the expansion initiation temperature T1 may be in a range of about 180 ° C to about 220 ° C. Thus, in the preparation process of the composite-based preformed board to be described later, when the sheath including the third thermoplastic resin, of the bicomponent fiber is melted to change to the binder 13, the thermally expandable fine particle 14 does not start to expand but maintains an original size.

Thus, in the preparation process of the composite material preforming board 100, the thermally expandable fine particle 14 does not expand but maintains an original size. Thus, the thickness of the composite material preforming board 100 may increase by expanding the thermally expandable fine particles 14 via an additional forming process in which heat is applied when needed later.

The thermally expandable fine particle 14 is a spherical particle. In this connection, a sphere does not mean a geometrically perfect sphere. It is to be understood that the sphere includes a three-dimensional shape whose cross section is circular or substantially circular.

The thermally expandable fine particle 14 may have an average diameter of a cross-section in a range of about 5 μm to about 50 μm in an original size before expansion. For example, it may suffice that the average diameter is in a range of about 20 micrometers to about 40 micrometers. When the thermally expandable fine particle 14 has the size of the above range, the particles 14 may be uniformly dispersed in the pores defined by the first fiber, the second fiber and the binder. Further, at the maximum expansion temperature T2, the thermally expandable fine particle 14 expands from the original size to the aforementioned expansion extent in the diameter of the cross section or volume, thereby controlling the thickness of the composite-based preformed board 100. When the thermally expandable fine particle 14 is too small, the particles does not disperse in the pores and deviate out of the pores. Alternatively, although the particle expands, this expansion may not affect the thickness of the composite-based preformed board 100.

The thermally expandable fine particle 14 expands to about 3 to about 12 times of the original diameter of the cross section at the maximum expansion temperature T2, and, in other words, expands to about 30 times or larger, for example, about 40 to about 200 times of the original volume at the maximum expansion temperature T2. That is, after expansion, the thermally expandable fine particle 14 has a cross sectional diameter which is 3 to 12 times longer than the cross sectional diameter before expansion. In other words, after expansion, the thermally expandable fine particle 14 has a volume which is 40 to 200 times larger than the volume before expansion. The thermally expandable fine particle 14 has the above ranged expansion to control the thickness of the composite-based preformed board 100 extensively.

The composite-based preformed board 100 may contain about 0.1% to about 5% by weight of the thermally expandable fine particles 14, for example, about 1% to about 3% by weight of the particles 14.

When the composite-based preformed board 100 contains the thermally expandable fine particles 14, the composite-based preformed board 100 has a forming ability due to the change of the thickness and improved thermal insulation performance and sound absorbing and insulating performance due to formation of an additional closed-pore structure inside the board. Conventionally, a glass bubble is used for this effect, but the glass bubble is brittle and easily damaged. Further, when assembling or using a part using the board 100, the glass component may be scattered and may have a harmful effect on the human body. In other words, when the board 100 contains the thermally expandable fine particles 14, the composite-based preformed board 100 in accordance with the present disclosure may achieve excellent durability and human-friendly effects together with the above-mentioned advantages.

Another implementation of the present disclosure provides a preparation method of the composite-based preformed board.

The method for preparing a composite-based preformed board includes dispersing reinforced fibers and bicomponent polymer fibers in an aqueous solution to prepare a slurry solution; forming a web from the slurry solution using a wet papermaking process; spray-coating thermally expandable fine particles on the web; drying the web coated with the thermally expandable fine particles to prepare a composite material sheet; and laminating and pressing-forming at least two composite material sheets to prepare a composite-based preformed board.

Int this connection, the reinforced fiber is a first fiber including a first thermoplastic resin, wherein the bicomponent polymer fiber has a core including a second thermoplastic resin and a sheath including a third thermoplastic resin, wherein a melting point of each of the first thermoplastic resin and the second thermoplastic resin is higher than a melting point of the third thermoplastic resin.

Details about the first thermoplastic resin, the second thermoplastic resin and the third thermoplastic resin are the same as described above. Further, details about the thermally expandable fine particles are the same as described above.

The slurry solution is prepared by dispersing the reinforced fibers and the bicomponent polymer fibers in an aqueous solution.

In this connection, the reinforced fiber and the bicomponent polymer fiber may be surface-treated to improve dispersibility thereof in the aqueous solution. For example, the surface treatment may introduce functional groups such as fluorine, hydroxy, carboxyl, alkyl, silane groups, etc. on outermost surfaces of the reinforced fibers and the bicomponent polymer fibers. Alternatively, in the surface treatment, the outermost surfaces of the reinforced fiber and the bicomponent polymer fiber may be subjected to carbonization, hydrolysis or oxidization.

Further, when the surface treatment of the reinforced fiber and the bicomponent polymer fiber is executed, functionalities such as hydrophilicity/hydrophobicity, water repellency, flame retardancy, nonflammability, heat resistance, acid resistance, alkali resistance, endurability, and contamination resistance may be imparted to the surfaces thereof depending on a coating agent applied to the surfaces.

For example, the coating agent for the surface treatment may include a fluorine based wax, a hydrocarbon based wax, a silicone based polymer, and the like. The fluorine based wax or the hydrocarbon based wax may serve as a water repellent.

In preparing the slurry solution, a total content of the reinforced fibers and the bicomponent polymer fibers per 1 L of the aqueous solution may be in a range of about 0.1 g to about 10 g. Adjusting the total content of the fibers in the aqueous solution to the content of the above range may ensure excellent dispersibility, and formation of the web having an uniform thickness.

Further, pH of the aqueous solution may be in a range of about 1 to about 8, for example, about 3 to about 7. Adjusting the pH of the aqueous solution to the above range may generate charges on the surfaces of the reinforced fiber and the bicomponent polymer fiber to further improve dispersibility.

The slurry solution may further include additives such as a crosslinking agent or an additional binder, as necessary.

The crosslinking agent acts to strengthen a chemical bond between the reinforced fiber and the bicomponent polymer fiber. For example, a silane compound, a maleic acid compound, or the like may be used as the crosslinking agent.

A content of the crosslinking agent may be in a range of about 0 parts by weight to about 5 parts by weight based on 100 parts by weight of a total amount of the reinforced fiber and the bicomponent polymer fiber. For example, it may suffice that a content of the crosslinking agent may be in a range of greater than about 0 weight part and about 1 weight part or smaller.

The additional binder may include water-soluble polymers such as starch, casein, polyvinyl alcohol (PVA), carboxymethyl cellulose (CMC); emulsions such as polyethylene, polypropylene and polyamide; cements; inorganic compounds such as calcium sulfate clay, sodium silicate, alumina silicate and calcium silicate; etc.

A content of the additional binder may be in a range of about 0 parts by weight to about 5 parts by weight based on 100 parts by weight of a total amount of the reinforced fiber and the bicomponent polymer fiber. For example, it may suffice that a content of the additional binder may be in a range of greater than about 0 parts by weight and about 3 parts by weight or smaller

The slurry solution contains about 30 parts by weight to about 50 parts by weight of the bicomponent polymer fiber based on 100 parts by weight of the reinforced fiber.

Further, the bicomponent polymer fiber may include from about 40 parts by weight to about 150 parts by weight of the sheath, based on 100 parts by weight of the core. For example, the bicomponent polymer fiber may include from about 80 parts by weight to about 120 parts by weight of the sheath, based on 100 parts by weight of the core.

Thus, when the sheath of the bicomponent polymer fiber is melted and changed into a binder, a three-dimensional irregularly networked structure may be formed to contain pores of a size suitable such that the thermally-expandable fine particles are evenly distributed. Further, due to the expansion of the thermally-expandable fine particles and the relaxation of the binder, a physical structure with easy thickness control ability may be formed.

The web is prepared by processing the slurry solution using a wet papermaking process.

FIG. 3 schematically shows a portion of the preparation process of the composite-based preformed board 100. Referring to FIG. 3, the slurry solution 40 is prepared by evenly mixing the reinforced fiber and the bicomponent polymer fiber in an aqueous solution using an agitator 30. The slurry solution 40 is dehydrated while moving through a mesh loaded on a conveyor belt 50, thereby to prepare a wet web 20.

The conveyor belt 50 may be inclined at a predefined angle with respect to a ground as needed. As such, at least a portion of the reinforced and bicomponent polymer fibers in the slurry solution 40 may be oriented in a travel direction of the conveyor belt 50. In this case, a high strength of the board 100 with respect to the orientation direction may be achieved.

Subsequently, the thermally expandable fine particles may be coated onto the wet web 20 using a spraying device 60.

More specifically, the thermally-expandable fine particles may be dispersed on the wet web 20 by spray-coating the thermally-expandable fine particle coating solution containing an aqueous solvent and the thermally-expandable fine particles on the web 20 using the spraying device 60.

In this connection, spray-coating the thermally expandable fine particles on the wet web 20 may involve a vacuum suction process. In other words, the thermal spraying device 60 may be used to coat thermally expandable fine particles while simultaneously applying the vacuum intake system 70 to ensure that the thermally expandable fine particles are evenly dispersed within the wet web 20.

The thermally expandable fine particles may be added to the agitator 30 when preparing the slurry solution 40. In this case, the particle may not be dispersed evenly. A large loss of material may occur in the process. In other words, the preparation method of the composite-based preformed board uses the spray coating and vacuum suction method as the thermally expandable fine particle coating method. Thus, this method may achieve excellent dispersibility and cost reduction, compared with the approach in which the thermally expandable fine particles are added to the agitator 30 when preparing the slurry solution 40.

The wet web 20 may then be dried using a dryer 80 and prepared into a composite material sheet 90. A drying temperature of the dryer 80 may be lower than the melting point of the third thermoplastic resin. That is, the composite material sheet 90 has a state in which the sheath of the bicomponent fiber is not melted, and the reinforced fiber and the bicomponent fiber are physically entangled with each other, and the thermally expandable fine particles are dispersed therebetween.

The preparation method of the composite-based preformed board 100 includes laminating at least two composite material sheets 90 and press-forming the laminate to prepare the composite-based preformed board 100.

The press forming is performed by pressing the laminate at a predefined temperature. More specifically, the press forming may be performed at a temperature that satisfies following three conditions simultaneously:

I) a temperature higher than the melting point of the third thermoplastic resin;
II) a temperature lower than the melting point of the first thermoplastic resin or the melting point of the second thermoplastic resin; and
III) a temperature lower than the expansion initiation temperature of the thermally expandable fine particles.

As a result, the sheath of the bicomponent polymer fiber in the composite material sheet 90 may be melted in the press forming to act as a binder. At the same time, a porous structure may be formed via physical entanglement of the reinforced fibers and cores of the bicomponent fibers. The thermally expandable fine particles maintains an original size. Thus, a composite-based preformed board which may be changed in thickness in a subsequent processing may be prepared.

The press forming may be performed under a pressure of about 1 bar to about 30 bar. When the pressurization pressure is too high, the porous structure of the composite-based preformed board may not be formed. Further, the thermally expandable fine particles are damaged and may not have properties that may vary a thickness. Further, when the pressurization pressure is excessively low, an interface adhesion between adjacent two composite material sheets 90 is deteriorated.

In the preparation method, the composite-based preformed board 100 may be prepared, the board 100 including the first fiber 11 derived from the reinforced fiber and the second fiber 12 derived from the core of the bicomponent polymer fiber, and the binder 13 derived from the sheath of the bicomponent polymer fiber to bind the first fiber 11 and the second fiber 12 to each other. The board 100 may have an irregularly networked structure in which the thermally-expandable fine particles 14 are positioned within the pores defined by the first fiber 11, the second fiber 12 and the binder 13.

That is, the details regarding the first fiber 11 and the second fiber 12 are the same as described above.

Hereinafter, specific examples of the present disclosure will be presented. However, the examples as described below are merely to specifically illustrate or explain the present disclosure and should not limit the present disclosure.

<Present Example and Comparative Example>

**Present Example 1**

A bicomponent polymer fiber having a polyester core with a melting point of 260 °C and elongation smaller than 300% and a polyester sheath with 160 °C melting point at a weight ratio of 50:50, and having a length of 5 mm, and having a diameter of 4 deniers (about 20 $\mu$m) in the cross section perpendicular to a longitudinal direction was prepared.

Then, a polyester drawn yarn with elongation of 300% and having a length of 13 mm, and a diameter of a cross section perpendicular to a longitudinal direction being 13 $\mu$m, and having a melting point of 260 °C was prepared as the reinforced fiber.

40 parts by weight of the bicomponent polymer fibers were mixed with 100 parts by weight of the reinforced fibers. We stirred the mixture for 1 hour in HCl aqueous solution adjusted to pH 5 to 7, thereby to prepare the slurry solution. In this connection, a total content of the reinforced fiber and the bicomponent polymer fiber per 1 L of the aqueous solution amounted to 2 g.

Subsequently, the slurry solution passed through a vacuum suction system while moving the slurry solution through a mesh traveling on a conveyor belt to prepare a wet web.

Subsequently, we spray-coated, on the wet web, a coating solution including the thermally-expandable fine particles of 2% by weight based on the total weight of the composite material sheet to be finally prepared, an acrylic binder and water. At the same time, vacuum suction was performed to disperse the thermally expandable fine particles on the wet web. The thermally expandable fine particles were those listed in Table 1 below.

The wet web was completely dried by passing the web through an oven dryer at 140 °C to prepare a composite material sheet. A basis weight of the dried composite material sheet was 300 g/m$^2$ and the thickness thereof was 5 mm.

Four composite material sheets were laminated. The laminate was pressed under a pressure of 5bar at 180 °C. Thus, a composite-based preformed board having a final thickness 3mm was prepared.

**Present Example 2**

A composite-based preformed board of the same thickness was prepared in the same manner as in Present Example 1 except for using a coating solution containing 1% by weight of thermally-expandable fine particles based on a total weight of a composite material sheet to be finally prepared, acrylic binder and water.

**Comparative Example 1**

A composite-based preformed board of the same thickness was prepared in the same manner as in Present Example 1 except for not including the thermally expandable fine particles.

**Comparative Example 2**

A composite-based preformed board of the same thickness was prepared in the same manner as in Present Example 1 except for not including the thermally expandable fine particles and except that instead of the polyester drawn yarn, a glass fiber with a diameter of 13 $\mu$m in a cross section perpendicular to a longitudinal direction and being 13 mm long was used as the reinforced fiber.

[Table 1]

| Thermally expandable fine particle | | |
|---|---|---|
| Material of shell | | Acrylonitrile resin |
| Core type | | Hydrocarbon gas |
| Expansion initiation temperature (°C) | | 190°C |
| Cross-sectional average diameter ($\mu$m) before expansion | | 40$\mu$m |
| Expansion ratio at maximum expansion temperature | In cross-sectional diameter | 4 times |
| | In volume | 60 times |

**<Evaluation>**

**Experimental Example 1: Evaluation of Thickness Change**

The composite-based preformed boards of the Present Examples 1 and 2 and the Comparative Examples 1 and 2 were preheated at 200 ° C. Then, percent changes in a thickness according to Equation 1 below thereof were measured. The results are as described in Table 2 below.

[Equation 1]

$$\text{Thickness change \% = thickness after thermoforming/thickness before thermoforming} \times 100$$

[Table 2]

| Examples | Thickness before thermoforming [mm] | Thickness after thermoforming [mm] | Thickness change [%] |
|---|---|---|---|
| Present Example 1 | 3 | 14 | 467 |
| Present Example 2 | 3 | 10.4 | 347 |
| Comparative Example 1 | 3 | 3 | 0 |
| Comparative Example 2 | 3 | 7.2 | 240 |

**Experimental Example 2: Measurement of Flexural Strength**

After preheating the composite-based preformed boards of the Present Examples 1 and 2 and the Comparative Examples 1 and 2 to 200 °C and cold-pressing the boards, flexural strengths thereof were measured using Universal Testing device (Instron, 5900 series). The results are as described in Table 3 below.
[Table 3]

|  | Flexural strength [MPa] |
| --- | --- |
| Present Example 1 | 33 |
| Present Example 2 | 30 |
| Comparative Example 1 | 27 |
| Comparative Example 2 | 37 |

Referring to the results of the Tables 2 and 3, the composite-based preformed boards of Present Examples 1 and 2 according to one implementation of the present disclosure has a significantly larger thickness change, compared to Comparative Example 1 without using the thermally expandable fine particles, and to Comparative Example 2 in which the glass fiber having elasticity is used without using the thermally expandable fine particles. Further, the composite-based preformed boards of Present Examples 1 and 2 exhibit the flexural strength of about 30 MPa to about 35 MPa, and thus simultaneously obtain adequate rigidity and flexibility.

**Reference numerals**

| | |
| --- | --- |
| 100: | Composite-based preformed board |
| 11: | First fiber |
| 12: | Second fiber |
| 13: | Binder |
| 14: | Thermally expandable fine particle |
| 141: | Shell |
| 142: | Core |
| T1: | Expansion initiation temperature |
| T2: | Maximum expansion temperature |
| T3: | Breakage temperature |
| 20: | Wet web |
| 30: | Agitator |
| 40: | Slurry solution |
| 50: | Conveyor belt |
| 60: | Spraying device |
| 70: | Vacuum suction system |
| 80: | Dryer |
| 90: | Composite material sheet |

**Claims**

1. A composite-based preformed board (100) comprising a first fiber (11); a second fiber (12); a binder (13) for binding the first fiber and the second fiber to each other; and a thermally expandable particle (14),

   wherein the first fiber (11) and the second fiber (12) are bound to each other by the binder (13) to form an irregularly networked structure containing a pore therein, wherein the second fiber (12) includes a second thermoplastic resin,
   wherein the binder (13) includes a third thermoplastic resin,
   wherein a melting point of the second thermoplastic resin is higher than a melting point of the third thermoplastic resin,

**characterized in that** the first fiber (11) includes a first thermoplastic resin having a melting point higher than a melting point of the third thermoplastic resin, the first fiber (11) being a drawn fiber having elongation of 300% to 600%,

wherein a total content of the second fiber (12) and the binder (13) is in a range of 30 to 50 parts by weight with respect to 100 parts by weight of the first fiber (11), wherein the second fiber (12) is a non-drawn fiber having elongation 0% or a drawn fiber having elongation smaller than 300%,

wherein the thermally expandable particle is a thermally expandable fine particle (14) positioned in the pore,

wherein the thermally expandable fine particle (14) has a core-shell structure composed of a shell (141) made of a fourth thermoplastic resin and a core (142) containing hydrocarbon gas, and

wherein the thermally expandable fine particle (14) has a volume at a maximum expansion temperature (T2) 40 to 200 times larger than a volume before expansion.

2. The composite-based preformed board of claim 1, wherein the binder (13) is coated on an entirety or a portion of a surface of each of the first fiber (11) and the second fiber (12) to form coatings thereon,
wherein the coatings are fused to each other such that the first and second fibers are bound to each other

3. The composite-based preformed board of claim 1, wherein a content of the binder (13) is in a range of 40 to 250 parts by weight based on 100 parts by weight of the second fiber.

4. The composite-based preformed board of claim 1, wherein a specific gravity of each of the first thermoplastic resin and the second thermoplastic resin is greater than 1.

5. The composite-based preformed board of claim 1, wherein the melting point of each of the first thermoplastic resin and the second thermoplastic resin is in a range of 200 ° C to 270 ° C,
wherein the melting point of the third thermoplastic resin is lower than 200 °C.

6. The composite-based preformed board of claim 1, wherein an expansion initiation temperature (T1) of the thermally expandable fine particles (14) is higher than the melting point of the third thermoplastic resin.

7. The composite-based preformed board of claim 1, wherein the thermally expandable fine particle (14) has a cross-sectional average diameter of 5 to 50 $\mu$m before expansion.

8. The composite-based preformed board of claim 1, wherein the thermally expandable fine particle (14) has a cross-sectional diameter at a maximum expansion temperature 3 to 12 times larger than a cross-sectional diameter before expansion.

9. A method for preparing a composite-based preformed board (100), the method including:

dispersing reinforced fibers and bicomponent polymer fibers in an aqueous solution to prepare a slurry solution (40);

forming a web (20) from the slurry solution using a wet papermaking process;

spray-coating thermally expandable fine particles on the web;

drying the web coated with the thermally expandable fine particles to prepare a composite material sheet (90); and

laminating and pressing-forming at least two composite material sheets to prepare a composite-based preformed board (100),

wherein the reinforced fiber is a first fiber (11) including a first thermoplastic resin,

wherein the bicomponent polymer fiber has a core including a second thermoplastic resin and a sheath including a third thermoplastic resin,

wherein the second thermoplastic resin is included in a second fiber (12),

wherein the third thermoplastic resin is included in a binder,

wherein the first fiber (11) is a drawn fiber having elongation of 300% to 600%,

wherein the second fiber (12) is a non-drawn fiber having elongation 0% or a drawn fiber having elongation smaller than 300%,

wherein a melting point of each of the first thermoplastic resin and the second thermoplastic resin is higher than a melting point of the third thermoplastic resin,

wherein a content of the bicomponent polymer fiber is in a range of 30 to 50 parts by weight based on 100 parts by weight of the reinforced fiber,

wherein the thermally expandable fine particles (14) have a core-shell structure composed of a shell (141) made of a fourth thermoplastic resin and a core (142) containing hydrocarbon gas, and

wherein the thermally expandable fine particles (14) have a volume at a maximum expansion temperature (T2) 40 to 200 times larger than a volume before expansion.

10. The method of claim 9, wherein a total content of the reinforced fiber and the bicomponent polymer fiber per 1 L of the aqueous solution is in a range of 0.1 g to 10 g.

11. The method of claim 9, wherein pH of the aqueous solution is in a range of 1 to 8.

12. The method of claim 9, wherein drying the web coated with the thermally expandable fine particles (14) to prepare the composite material sheet (90) is performed at a temperature lower than a melting point of the third thermoplastic resin,

wherein laminating and pressing-forming at least two composite material sheets to prepare the composite-based preformed board (100) is performed at a temperature:

higher than the melting point of the third thermoplastic resin;
lower than the melting point of the first thermoplastic resin or lower than the melting point of the second thermoplastic resin; and
lower than an expansion initiation temperature (T1) of the thermally expandable fine particles.


## Patentansprüche

1. Vorgeformte Platte (100) auf Verbundbasis, umfassend eine erste Faser (11); eine zweite Faser (12); ein Bindemittel (13) zum Binden der ersten Faser und der zweiten Faser aneinander; und ein thermisch expandierbares Partikel (14),

wobei die erste Faser (11) und die zweite Faser (12) durch das Bindemittel (13) aneinander gebunden sind, um eine unregelmäßig vernetzte Struktur zu bilden, die eine Pore darin enthält,

wobei die zweite Faser (12) ein zweites thermoplastisches Harz umfasst, wobei das Bindemittel (13) ein drittes thermoplastisches Harz umfasst, wobei ein Schmelzpunkt des zweiten thermoplastischen Harzes höher ist als ein Schmelzpunkt des dritten thermoplastischen Harzes,

**dadurch gekennzeichnet, dass** die erste Faser (11) ein erstes thermoplastisches Harz mit einem Schmelzpunkt aufweist, der höher als ein Schmelzpunkt des dritten thermoplastischen Harzes ist, wobei die erste Faser (11) eine gezogene Faser mit einer Dehnung von 300% bis 600% ist,

wobei ein Gesamtgehalt der zweiten Faser (12) und des Bindemittels (13) in einem Bereich von 30 bis 50 Gewichtsteilen, bezogen auf 100 Gewichtsteile der ersten Faser (11), liegt, wobei die zweite Faser (12) eine nicht-gezogene Faser mit einer Dehnung von 0% oder eine gezogene Faser mit einer Dehnung kleiner als 300% ist,

wobei das thermisch expandierbare Partikel ein thermisch expandierbares Feinpartikel (14) ist, das in der Pore positioniert ist,

wobei das thermisch expandierbare Feinpartikel (14) eine Kern-Schale-Struktur aufweist, die aus einer Hülle (141) aus einem vierten thermoplastischen Harz und einem Kern (142) besteht, der Kohlenwasserstoffgas enthält, und wobei das thermisch expandierbare Feinpartikel (14) ein Volumen bei einer maximalen Expansionstemperatur (T2) 40 bis 200 mal größer als ein Volumen vor der Expansion aufweist.

2. Vorgeformte Platte auf Verbundbasis nach Anspruch 1, wobei das Bindemittel (13) auf einer Gesamtheit oder einem Teil einer Oberfläche von jeder der ersten Faser (11) und der zweiten Faser (12) beschichtet ist, um Beschichtungen darauf zu bilden,

wobei die Beschichtungen miteinander verschmolzen sind, so dass die ersten und zweiten Fasern aneinander gebunden sind.

3. Vorgeformte Platte auf Verbundbasis nach Anspruch 1, wobei ein Gehalt des Bindemittels (13) in einem Bereich von 40 bis 250 Gewichtsteilen, basierend auf auf 100 Gewichtsteilen der zweiten Faser liegt.

4. Vorgeformte Platte auf Verbundbasis nach Anspruch 1, wobei eine spezifische Schwerkraft von jedem des ersten thermoplastischen Harzes und des zweiten thermoplastischen Harzes größer als 1 ist.

**5.** Vorgeformte Platte auf Verbundbasis nach Anspruch 1, wobei der Schmelzpunkt von jedem des ersten thermoplastischen Harzes und des zweiten thermoplastischen Harzes in einem Bereich von 200°C bis 270°C ist, wobei der Schmelzpunkt des dritten thermoplastischen Harzes kleiner als 200 °Cist.

**6.** Vorgeformte Platte auf Verbundbasis nach Anspruch 1, wobei eine Expansionseinleitungstemperatur (T1) der thermisch expandierbaren Feinpartikel (14) höher ist als der Schmelzpunkt des dritten thermoplastischen Harzes.

**7.** Vorgeformte Platte auf Verbundbasis nach Anspruch 1, wobei das thermisch expandierbare Feinpartikel (14) vor der Expansion einen durchschnittlichen Querschnittsdurchmesser von 5 bis 50 $\mu$m aufweist.

**8.** Vorgeformte Platte auf Verbundbasis nach Anspruch 1, wobei das thermisch expandierbare Feinpartikel (14) einen Querschnittsdurchmesser bei einer maximalen Expansionstemperatur 3 bis 12 mal größer als ein Querschnittsdurchmesser vor der Expansion aufweist.

**9.** Verfahren zur Herstellung einer vorgeformten Platte (100) auf Verbundbasis, wobei das Verfahren umfasst:

Dispergieren von verstärkten Fasern und Bikomponentenpolymerfasern in einer wässrigen Lösung, um eine Aufschlämmungslösung (40) herzustellen;
Bilden einer Bahn (20) aus der Aufschlämmungslösung unter Verwendung eines Nasspapierherstellungsprozesses;
Sprühbeschichten von thermisch expandierbaren Feinpartikeln auf die Bahn; Trocknen der mit den thermisch expandierbaren Feinpartikeln beschichteten Bahn, um ein Verbundwerkstoffblech (90) herzustellen; und
Laminieren und Verpressen von mindestens zwei Verbundwerkstoffblechen zur Herstellung einer vorgeformten Platte (100) auf Verbundbasis,
wobei die verstärkte Faser eine erste Faser (11) ist, die ein erstes thermoplastisches Harz umfasst,
wobei die Bikomponentenpolymerfaser einen Kern aufweist, der ein zweites thermoplastisches Harz und eine Hülle umfasst, die ein drittes thermoplastisches Harz umfasst,
wobei das zweite thermoplastische Harz in einer zweiten Faser (12) enthalten ist,
wobei das dritte thermoplastische Harz in einem Bindemittel enthalten ist,
wobei die erste Faser (11) eine gezogene Faser mit einer Dehnung von 300% bis 600% ist,
wobei die zweite Faser (12) eine nicht-gezogene Faser mit einer Dehnung von 0% oder eine gezogene Faser mit einer Dehnung kleiner als 300% ist,
wobei ein Schmelzpunkt von jedem des ersten thermoplastischen Harzes und des zweiten thermoplastischen Harzes höher ist als ein Schmelzpunkt des dritten thermoplastischen Harzes,
wobei ein Gehalt der Bikomponentenpolymerfaser in einem Bereich von 30 bis 50 Gewichtsteilen, basierend auf 100 Gewichtsteilen der verstärkten Faser, liegt,
wobei die thermisch expandierbaren Feinpartikel (14) eine Kern-Schale-Struktur aufweisen, die aus einer Hülle (141) aus einem vierten thermoplastischen Harz und einem Kern (142) besteht, der Kohlenwasserstoffgas enthält, und
wobei die thermisch expandierbaren Feinpartikel (14) ein Volumen bei einer maximalen Expansionstemperatur (T2) 40 bis 200 mal größer als ein Volumen vor der Expansion aufweisen.

**10.** Verfahren nach Anspruch 9, wobei ein Gesamtgehalt der verstärkten Faser und der Bikomponentenpolymerfaser pro 1 L der wässrigen Lösung in einem Bereich von 0,1 g bis 10 g liegt.

**11.** Verfahren nach Anspruch 9, wobei der pH-Wert der wässrigen Lösung in einem Bereich von 1 bis 8 liegt.

**12.** Verfahren nach Anspruch 9, wobei das Trocknen der mit den thermisch expandierbaren feinen Partikeln (14) beschichteten Bahn, um das Verbundwerkstoffblech (90) herzustellen, bei einer Temperatur durchgeführt wird, die niedriger als ein Schmelzpunkt des dritten thermoplastischen Harzes ist, wobei das Laminieren und Verpressen von mindestens zwei Verbundwerkstoffblechen zur Herstellung einer vorgeformten Platte (100) auf Verbundbasis bei einer Temperatur durchgeführt wird:

höher als der Schmelzpunkt des dritten thermoplastischen Harzes;
niedriger als der Schmelzpunkt des ersten thermoplastischen Harzes oder
niedriger als der Schmelzpunkt des zweiten thermoplastischen Harzes; und
niedriger als eine Expansionseinleitungstemperatur (T1) der thermisch expandierbaren Feinpartikel.

**Revendications**

1. Plaque préformée à base de composite (100) comprenant une première fibre (11) ; une deuxième fibre (12) ; un liant (13) pour lier la première fibre et la deuxième fibre l'une à l'autre ; et une particule thermiquement expansible (14),

   dans laquelle la première fibre (11) et la deuxième fibre (12) sont liées l'une à l'autre par le liant (13) pour former une structure en réseau irrégulière y contenant un pore,
   dans laquelle la deuxième fibre (12) comprend une deuxième résine thermoplastique,
   dans laquelle le liant (13) comprend une troisième résine thermoplastique, dans laquelle un point de fusion de la deuxième résine thermoplastique est supérieur à un point de fusion de la troisième résine thermoplastique, **caractérisée en ce que** la première fibre (11) comprend une première résine thermoplastique ayant un point de fusion supérieur à un point de fusion de la troisième résine thermoplastique, la première fibre (11) étant une fibre étirée ayant un allongement de 300% à 600%,
   dans laquelle une teneur totale de la deuxième fibre (12) et du liant (13) est dans une plage de 30 à 50 parties en poids par rapport à 100 parties en poids de la première fibre (11), dans laquelle la deuxième fibre (12) est une fibre non étirée ayant un allongement de 0% ou une fibre étirée ayant un allongement inférieur à 300%,
   dans laquelle la particule thermiquement expansible est une particule fine thermiquement expansible (14) positionnée dans le pore,
   dans laquelle la particule fine thermiquement expansible (14) présente une structure noyau-enveloppe composée d'une enveloppe (141) constituée d'une quatrième résine thermoplastique et d'un noyau (142) contenant un gaz d'hydrocarbure, et
   dans laquelle la particule fine thermiquement expansible (14) présente un volume à une température d'expansion maximale ($T2$) 40 à 200 fois supérieur à un volume avant l'expansion.

2. Plaque préformée à base de composite selon la revendication 1, dans laquelle le liant (13) est revêtu sur une totalité ou une partie d'une surface de chacune de la première fibre (11) et de la deuxième fibre (12) pour former des revêtements dessus,
   dans laquelle les revêtements sont fusionnés les uns aux autres de sorte que les première et deuxième fibres sont liées l'une à l'autre.

3. Plaque préformée à base de composite selon la revendication 1, dans laquelle une teneur en liant (13) est dans une plage de 40 à 250 parties en poids sur la base de 100 parties en poids de la deuxième fibre.

4. Plaque préformée à base de composite selon la revendication 1, dans laquelle une gravité spécifique de chacune de la première résine thermoplastique et de la deuxième résine thermoplastique est supérieure à 1.

5. Plaque préformée à base de composite selon la revendication 1, dans laquelle le point de fusion de chacune de la première résine thermoplastique et de la deuxième résine thermoplastique est dans une plage de 200°C à 270°C, dans lequel le point de fusion de la troisième résine thermoplastique est inférieur supérieure à 200°C.

6. Plaque préformée à base de composite selon la revendication 1, dans laquelle une température de début d'expansion ($T1$) des particules fines thermiquement expansibles (14) est supérieure au point de fusion de la troisième résine thermoplastique.

7. Plaque préformée à base de composite selon la revendication 1, dans laquelle la particule fine thermiquement expansible (14) présente un diamètre moyen en coupe transversale de 5 à 50 μm avant l'expansion.

8. Plaque préformée à base de composite selon la revendication 1, dans laquelle la particule fine thermiquement expansible (14) présente un diamètre en coupe transversale à une température d'expansion maximale de 3 à 12 fois supérieur à un diamètre en coupe transversale avant l'expansion.

9. Procédé de préparation d'une plaque préformée à base de composite (100), le procédé comprenant les étapes consistant à :

   disperser des fibres renforcées et des fibres polymères à deux composants dans une solution aqueuse pour préparer une solution de bouillie (40) ;
   former une bande (20) à partir de la solution de bouillie en utilisant un procédé de fabrication de papier par voie humide ;

enduire par pulvérisation de fines particules thermo-expansibles sur la bande ;

sécher la bande revêtue des fines particules thermo-expansibles pour préparer une feuille de matériau composite (90) ; et

stratifier et former par pression au moins deux feuilles de matériau composite pour préparer une plaque préformée à base de composite (100),

dans lequel la fibre renforcée est une première fibre (11) comprenant une première résine thermoplastique,

dans lequel la fibre polymère à deux composants présente un noyau comprenant une deuxième résine thermoplastique et une gaine comprenant une troisième résine thermoplastique,

dans lequel la deuxième résine thermoplastique est incluse dans une deuxième fibre (12),

dans lequel la troisième résine thermoplastique est incluse dans un liant,

dans lequel la première fibre (11) est une fibre étirée ayant un allongement de 300% à 600%,

dans lequel la deuxième fibre (12) est une fibre non étirée ayant un allongement de 0% ou une fibre étirée ayant un allongement inférieur à 300%,

dans lequel un point de fusion de chacune de la première résine thermoplastique et de la deuxième résine thermoplastique est supérieur à un point de fusion de la troisième résine thermoplastique,

dans lequel une teneur de la fibre polymère à deux composants est dans une plage de 30 à 50 parties en poids par rapport à 100 parties en poids de la fibre renforcée,

dans lequel les particules fines thermiquement expansibles (14) présentent une structure noyau-enveloppe composée d'une enveloppe (141) constituée d'une quatrième résine thermoplastique et d'un noyau (142) contenant un gaz d'hydrocarbure, et

dans lequel les particules fines thermiquement expansibles (14) présentent un volume à une température d'expansion maximale (T2) 40 à 200 fois supérieur à un volume avant expansion.

10. Procédé selon la revendication 9, dans lequel une teneur totale de la fibre renforcée et de la fibre polymère à deux composants pour 1 litre de la solution aqueuse est dans une plage de 0,1 g à 10 g.

11. Procédé selon la revendication 9, dans lequel le pH de la solution aqueuse est dans une gamme de 1 à 8.

12. Procédé selon la revendication 9, dans lequel le séchage de la bande revêtue des fines particules thermo-expansibles (14) pour préparer la feuille de matériau composite (90) est effectué à une température inférieure à un point de fusion de la troisième résine thermoplastique,

dans lequel la stratification et la formation par pression d'au moins deux feuilles de matériaux composites pour préparer la plaque préformée à base de composite (100) sont réalisées à une température :

supérieure au point de fusion de la troisième résine thermoplastique ;

inférieure au point de fusion de la première résine thermoplastique ou inférieure au point de fusion de la deuxième résine thermoplastique ; et

inférieure à une température de début d'expansion (T1) des fines particules thermiquement expansibles.

【FIG. 1】

【FIG. 2】

14

141

142

T1

Heating

T2

Heating

T3

【FIG. 3】

30

60

80

20

90

50

70

40

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017003146 A1